Europäisches Patentamt

European Patent Office

Office européen des brevets

(19)

(11) **EP 0 256 222 B2**

(12) **NEUE EUROPÄISCHE PATENTSCHRIFT**

(45) Veröffentlichungstag und Bekanntmachung des Hinweises auf die Entscheidung über den Einspruch:
**03.01.1996 Patentblatt 1996/01**

(51) Int Cl.$^6$: **G01G 11/14**, G01G 11/00, G01F 1/76

(45) Hinweis auf die Patenterteilung:
**15.01.1992 Patentblatt 1992/03**

(21) Anmeldenummer: **87107076.9**

(22) Anmeldetag: **05.10.1984**

(54) **Durchlaufwaage zum Erfassen des Durchsatzes von in einer Getreidemühle verarbeiteten schüttbaren Nahrungsmitteln**

Balance for the continuous weighing and for the determination of the flow rate of bulk foodstuffs treated in a grain mill

Balance de pesage continu et de détermination du débit des aliments en vrac traités dans un moulin à blé

(84) Benannte Vertragsstaaten:
**AT BE CH DE FR GB IT LI SE**

(30) Priorität: **06.10.1983 CH 5437/83**
**30.11.1983 DE 3343349**

(43) Veröffentlichungstag der Anmeldung:
**24.02.1988 Patentblatt 1988/08**

(60) Teilanmeldung: **90123113.4**

(62) Anmeldenummer der früheren Anmeldung nach Art. 76 EPÜ: **84111967.0**

(73) Patentinhaber: **BÜHLER AG**
**CH-9240 Uzwil (CH)**

(72) Erfinder: **Gmuer, Bruno**
**CH-9014 St.Gallen (CH)**

(74) Vertreter: **EGLI-EUROPEAN PATENT ATTORNEYS**
**D-80538 München (DE)**

(56) Entgegenhaltungen:
**CH-A- 429 214        DE-A- 3 227 875**
**GB-A- 2 113 856        US-A- 3 853 190**

- **TECHNISCHES MESSEN T.M., Band 47, Nr. 4, April 1980, Seiten 137-140, München, DE; T. ALBERTZ: "Massenstrommessung in Stäuben"**
- **Prospekte Chronos Richardson PW 55**
- **Prospekte Chronos KMN, AW, VW**
- **Milling Feed and Fertilizer, März 1980, Seiten 16, 18, 20, 23, 28**
- **Guidelines for Specifying Weighfeeder Systems, Ascot,(GB), Mai 1986, Seite 11**
- **Weighing and Proportioning of Bulk Solids, Pittsburgh, (US) 1975 and 1983**

EP 0 256 222 B2

**Beschreibung**

Die Erfindung bezieht sich auf eine Durchlaufwaage zum Erfassen des Durchsatzes eines durch eine Förderleitung fließenden Stromes von in einer Getreidemühle verarbeiteten schüttbaren Nahrungsmitteln mit: einem Zuführleitungsabschnitt, einem dem Zuführleitungsabschnitt im Abstand nachgeordneten Wägeabschnitt und einem dem Wägeabschnitt im Abstand nachgeordneten Abführleitungsabschnitt.

In der Praxis stellt sich häufig bei Getreidemühlen die Notwendigkeit, den Durchsatz von dort verarbeiteten schüttbaren Nahrungsmitteln in einer Transportleitung aus unterschiedlichen Gründen zu erfassen. So kann z.B. das Erfordernis bestehen, über eine bestimmte Verarbeitungszeit hinweg die genaue durchgeflossene Schüttgutmenge zu erfassen, oder auch den Schüttgutstrom im Hinblick auf einen genauen zeitlichen Durchsatz zu steuern. Hierfür sind bislang im wesentlichen Schüttwaagen und Bandwaagen zur Verfügung gestanden. Wenn es sich um rein innerbetriebliche Vorgänge handelte, so wurden vielfach keine all zu großen Anforderungen an die Qualität der Messungen gestellt. Allerdings ist meistens zu fordern, daß der Schüttgutstrom möglichst nicht oder nicht während längerer Zeit wegen der Messung unterbrochen werden soll. Im Bereich von Getreidemühlenanlagen wurden gerade in neuerer Zeit in größerer Stückzahl Impulsmeßgeräte eingesetzt, wie sie z.B. aus der DE-C-2609167 oder aus der DE-C-2342668 (Offenlegungstag 7374) bekannt sind.

Ein auf eine konventionelle Waage herabfallender Schüttgutstrom ergibt zunächst keinen für die Vermessung sogleich brauchbaren Meßwert, da es ohne spezielle Einrichtungen nicht möglich ist, den von der Waage erfaßten Impulsanteil des fallenden Schüttgutstromes, der auch über der Zeit gesehen Schwankungen unterworfen ist, exakt von dem bereits auf der Waage befindlichen Gewichtsanteil der Schüttgutmasse zu trennen. Bei den bekannten Verfahren zur Messung des Durchsatzes mittels Impulsmeßgeräten wird der senkrecht herabfallende Schüttgutstrom abgelenkt. Durch die Umlenkung ergibt sich eine horizontale Kraftkomponente, die proportional der jeweils augenblicklich auf die Ablenkplatte herabfallenden Schüttgutrnenge ist, weshalb die Messung dieser Kraftkomponente einer Rückschluß auf den Durchsatz des Schüttgutes zuläßt. Mit einem solchen Meßsignal kann dann der Schüttgutdurchsatz über entsprechend gekoppelte Dosiergeräte auf einen gewünschten Wert eingestellt werden. Der Vorteil dieses bekannten Meßverfahrens ist darin zu sehen, daß der kontinuierliche Fluß des Schüttgutstromes auch durch die Messung nicht unterbrochen wird und der Produktfluß so, wie er auf das Meßgerät auffällt, weitergegeben werden kann. Zusätzlich sind die Herstellkosten solcher Impulsmeßgeräte gegenüber denen bisheriger Waagensysteme, etwa der Chargen- oder Bandwaagen, wesentlich geringer. Die Impulsmeßverfahren haben aber den Nachteil, daß ihre Genauigkeit jedoch nicht all zu den Nachteil, daß ihre Genauigkeit jedoch nicht all zu groß ist. Einflußfaktoren wie Luft- oder Materialfeuchtigkeit, Temperatur usw. können dabei meßtechnisch kaum eliminiert werden, so daß in der Praxis mit Meßwertstoleranzen in einem Bereich von ± 1% gerechnet werden muss. Bei extremen Schwankungen des Reibverhaltens zwischen Produkt und Ablenkplatte kann die Fehlanzeige sogar mehr als 1 % betragen.

Das Bestreben, möglichst auch in größeren Getreidemühlen den Schüttguttransport durch elektronische Rechner zu steuern und zu überwachen, läßt allerdings die Verwendung von Meßwerten mit solchen Fehlertoleranzen nicht mehr zu. So entspricht bei einer Mühle mit einer Tagesleistung von z.B. 500 t eine Fehlanzeige im Bereich von 1 % eine reellen Schüttgutfehler von insgesamt 5 t, was die Möglichkeit einer Rechnersteuerung einer solchen Mühle völlig in Frage stellen müßte.

In der DE-A-960 132 ist ein Verfahren zur Durchsatzmessung eines Schüttgutstromes beschrieben, bei dem das herabfallende Schüttgut aus der Förderleitung in einen Bypass umgelenkt und dort in eine innerhalb eines Rohrquerschnittes angeordnete Waage eingelejtet wird. Die Waage weist einen wegklappbaren Boden auf, der zunächst den Querschnitt des Waagenbehälters nach unten hin verschließt, so daß das herabfallende Produkt auf dem Boden aufgestapelt wird. Die Umlenkklappe, die dasSchüttgut aus der Haupt- in die Bypassleitung der Waage umlenkt, ist mit einem Zeitwerk derart gekoppelt, daß nach einer bestimmten vorgegebenen Zeit die Einleitung des Produktes in den Bypass wieder aufgehoben und die Hauptleitung freigegeben wird. Die Waage ist mit einer Vorrichtung zur Anzeige des eingespeisten Gewichtes verbunden, so daß die Bedienungsperson von dieser ablesen kann, welche Schüttgutmenge innerhalb des bekannten und vorgegebenen Zeitintervalls in den Verwägebehälter eingeleitet wurde, woraus sich dann auch unmittelbar der Durchsatz in der Haupttransportleitung ergibt Anschließend kann mechanisch der Boden der Waagen wieder geöffnet, das darin enthaltene Produkt ausgelassen, der Boden erneut geschlossen und dann der Vorgang wiederholt werden. Diese vorbekannte Vorrichtung ist zwar grundsätzlich geeignet, Messwerte zu liefem, die einen Rückschluss auf den Produktdurchsatz zulassen, sie weist jedoch Nachteile auf. So ist zunächst für die Durchführung der Wägung eine Umschaltung des Schüttgutzulaufes zwischen der Hauptleitung und der Bypassleitung notwendig, was grundsätzlich unerwünscht ist. Des weiteren ist das bekannte Verfahren auch sehr langsam, da es von einem mechanischen Wägesystem Gebrauch macht, das seinerseits mit relativ langen Verwägezeiten arbeiten muss, die vom Taktspiel der mechanischen Schieber zum Ein- bzw. Ausleiten des Hauptstromes abhängig sind, was alles mit einer relativ langen Taktzeit des gesamten Vorgangs verbunden ist, deren Dauer nicht mehr abgesenkt werden kann. Hinzu kommt auch eine unzureichende Wägegenauigkeit, da das Wägebehälter-Tara-Gewicht als Störgrösse nicht ausreichend berücksichtigt wird. Haftet etwa Produkt am Wägebehälter bereits zu Beginn des Waagevorgangs an, so ergibt sich ein variables Anfangsgewicht, das nicht vernachlässigt werden kann, dessen Variabilität aber bei der Ermittlung des Verwägungswertes unberücksichtigt bleibt. Auch dieser Stand der Technik ist nicht geeignet, dass man aus ihm abgeleitete Messwerte für die Computersteuerung einer gesamten grösseren Mühlenanlage einsetzen könnte, etwa für das exakte Mischen von verschiedenen Produktqualitäten oder über die Produktmengen Arbeitsabläufe zu steuern.

Aus der US-PS 3 853 190 ist eine Schüttgutdurchlaufwaage bekannt, die im wesentlichen folgende Abschnitte aufweist: einen Zuführabschnitt in Form eines schräg nach unten laufenden schlanken Rohres, einen dem Zuführabschnitt nachgeordneten Wägeabschnitt in Form eines vertikal angeordneten Wägegefäßes und einen im Abstand dem Wägeabschnitt nachgeordneten Abführabschnitt in Form eines Sammeltrichters mit anschließendem Schneckenaustrag. Im Auslaßbereich des Wägeabsnittes ist ein mit dem Wägeabschnitt verbundenes Verschlußorgan angeordnet, das mittels einer Steuereinrichtung in eine Schließund eine Offenstellung bringbar ist Es kann davon ausgegangen werden, daß bei vollkommener Öffnung des Verschlußorgans ein ungehinderter Schüttgutaustritt aus dem Wägeabschnitt garantiert ist. Der Wägeabschnitt hängt an Gewichtserfassungsmitteln. Die bekannte Vorrichtung hat den Vorteil, daß mit ihr das zu verwiegende Gut mit Waagegenauigkeit gemessen werden kann, jedoch nur dann, wenn sie im Chargenbetrieb arbeitet.

Ausgehend hiervon liegt der Erfindung die Aufgabe zugrunde, eine Vorrichtung für die Erfassung des Durchsatzes eines durch eine Förderleitung fließenden Stromes von in einer Getreidemühle verarbeiteten schüttbaren Nahrungsmitteln zu finden, die eine Bestimmung des Produktdurchsatzes mit einer Genauigkeit von weniger als ± 2‰ ermöglicht und auch bei ununterbrochener Produktzuführung einsetzbar ist, durch die somit die Genauigkeit von Industriewaagen erreicht wird, so dass auch für eine computergesteuerte Produktfluss-Ueberwachung eine ausreichende Genauigkeit der ermittelten Messwerte gegeben ist; dabei soll aber dennoch gleichzeitig der Aufwand gering gehalten werden.

Erfindungsgemäß wird diese Aufgabe durch den Gegenstand des Anspruch 1 gelöst, also durch eine Durchlaufwaage zum Erfassen des Durchsatzes eines durch eine Förderleitung fließenden Stromes von in einer Getreidemühle verarbeiteten schüttbaren Nahrungsmitteln mit

a) drei als ein Leitungsabschnitt der Förderleitung selbst ausgestalteten rohrförmigen Abschnitten, deren Innenquerschnitte einander entsprechende Form und im wesentlichen gleiche Querschnittsflächen haben, nämlich:

b) einem Zuführleitungsabschnitt,

c) einem dem Zuführleitungsabschnitt im Abstand nachgeordneten rohrförmigen Wägeabschnitt, und

d) einem dem Wägeabschnitt im Abstand nachgeordneten Abführleitungsabschnitt (3); wobei

e) nur der Wägeabschnitt auf elektronischen Gewichtserfassungsmitteln ruht; sowie

f) einem im Auslaßbereich des Wägeabschnittes mit diesem verbundenen und von diesem gehalterten verstellbaren Verschlußorgan, das derart ausgebildet und angeordnet ist, daß es in eine den Auslaufbereich des Wägeabschnittes verschließende Stellung und in eine einen ungehinderten Nahrungsmittelaustritt vom Wägeabschnitt in den Abführleitungsabschnitt gewährleistende Offenstellung bringbar ist; und schließlich

g) Mitteln zum Druckausgleich zwischen dem Zuführleitungsabschnitt und dem Abführleitungsabschnitt.

Die erfindungsgemässe Vorrichtung Ist offensichtlich einfach aufgebaut und erfordert auch nur relativ kleine Abmessungen . Die zum Beispiel bei Bandwaagen erforderliche, relativ lange horizontale Ausdehnung, entfällt, wodurch sich nicht nur eine erhebliche Platzeinsparung, sondern auch ein vergleichsweise geringer Aufwand bei der Herstellung ergibt. Sie weist auch den großen Vorteil auf, daß sie wegen ihrer Ausgestaltung als Leitungsabschnitt der Förderleitung selbst eine besonders platzsparende und günstige Einsetzbarkeit ermöglicht - auch in bereits vorhandene Förderleitungen. Dabei haben die wechselseitige Anpassung der Innenquerschnitte der drei Abschnitte der Durchlaufwaage sowie die Ausbildung des Verschlußorganes den großen Vorteil, daß keinerlei Störeffekte auf den Produktdurchfluß ausgeübt werden, und eine Selbstreinigung ermöglicht ist, insbesondere keine Produktreste im Wägeabschnitt hängenbleiben.

Besonders bevorzugt wird bei einer erfindungsgemäßen Vorrichtung der Wägeabschnitt mit einem zylindrischen Durchlaufraum versehen, dessen Höhe 1,5 bis 5 mal seinem Durchmesser entspricht.

Bei einer weiteren vorteilhaften Ausgestaltung der erfindungsgemäßen Durchlaufwaage ist das Verschlußorgan als verschieb-oder verschwenkbarer Abschlußschieber ausgebildet, der vorzugsweise über einen pneumatischen Zylinder betätigt wird, der seinerseits über einen elektro-pneumatischen Wandler von einem Rechner angesteuert wird. Hierdurch kann der Schieber mit einer steuerbaren Oeffnungsgeschwindigkeit bewegt werden, was in jedem Fall eine Vergleichmässigung der Gutabgabe nach Beendigung eines Wägezykluss erreichen lässt.

Eine andere vorteilhafte Ausgestaltung der erfindungsgemäßen Durchlaufwaage besteht auch darin, daß eine Dosiereinrichtung vorgesehen und mit einem Vorgabegerät zur Einstellung einer vorwählbaren kontinuierlichen Durchsatzleistung verbunden ist, wobei, wiederum vorzugsweise, ein Rechner zur Ansteuerung dieses Vorgabegerätes vorgesehen sein kann, der vom Ausgang der Einrichtung zur Ermittlung des Durchsatzes des in der Waage befindlichen Schüttgutes angesteuert wird, und wobei Rechner, Vorgabegerät, Dosiereinrichtung und Einrichtung zur Ermittlung des Durchsatzes eine Durchsatzregeleinrichtung ausbilden. Dabei läßt sich die Dosiereinrichtung für leicht fließfähige Schüttgüter in vorteilhafter Weise als Drehschieber ausbilden, während sie bei schwerfießfähigen Schüttgütern mit besonderem Vorteil als Dosierschnecke ausgeführt ist.

Es ist weiterhin von Vorteil, wenn bei der erfindungsgemäßen Durchlaufwaage der Zuführleitungs-Abschnitt unmittelbar über und den Abführleitungs-Abschnitt unmittelbar unter dem Wägeabschnitt über seitliches Druckausgleichsrohr frei miteinander verbunden sind.

Bei der erfindungsgemäen Durchlaufwaage besteht auch die vorteilhafte Möglichkeit, dieselbe nicht nur in einer senkrecht verlaufenden Transportleitung einzusetzen, sondern sie sogar in schräg angeordneten Schüttgutleitungen zu verwenden. Dabei wird dann auch der Wägeabschnitt in einer der Schräge der Schuttgutleitung entsprechenden Schräge eingebaut, d.h. die Mittelachsen beider fallen zusammen oder sind zumindest parallel zueinander ausgerichtet. Eine solche schräge Einbaumöglichkeit ergibt den Vorteil, daß ein direkter, sogar nachträglicher Einbau in bereits bestehende Siloanlagen mit Mehrfachzellen ohne Vorsehen einer Extrahöhe erfolgen kann.

Anwendungsmölichkeiten der erfindungsgemäßen Durchlaufwaage sind in der Stammanmeldung, nämlich der EP-A-0140213 ausführlich beschrieben. Zur Vermeidung von Wiederholungen wird hinsichtlich der Anwendungsmöglichkeiten der erfindungsgemäßen Durchlaufwaage ausdrücklich auf die genannte Stammanmeldung verwiesen.

Die Erfindung wird nachfolgend anhand der Zeichnung im Prinzip beispielshalber noch näher erläutert. Es zeigen:

Fig. 1 eine schematische Darstellung der Hauptelemente einer erfindungsgemäßen Durchlaufwaage;
Fig: 2 den Verlauf des gemessenen Schüttgutgewichtes pro Zeiteinheit während eines Wägezykluss bei einer erfindungsgemäßen Durchlaufwaage;
Fig. 3 eine diagrammatische Darstellung der Aufeinanderfolge mehrerer Referenzzeitabschnitte innerhalb des linearen Meßwertanstiegs der Waage (während eines Wägezyklusses);
Fig. 4 eine Prinzipdarstellung einer Durchlaufwaage mit einer kontinuierlichen Durchflußregelung; wie sie bei einer erfindungsgemäßen Durchlaufwaage einsetz bar ist;
Fig. 5 ein Schaltschema zur Messung der Kräfte, die an einem in der Durchlaufwaage eingesetzen elektronischen Gewichtserfassungsmittel angreifen;
Fig. 6 eine Darstellung elektronischer Gewichtserfassungsmittel in Gestalt eines Dehnmeßstreifen-Wägebalkens.

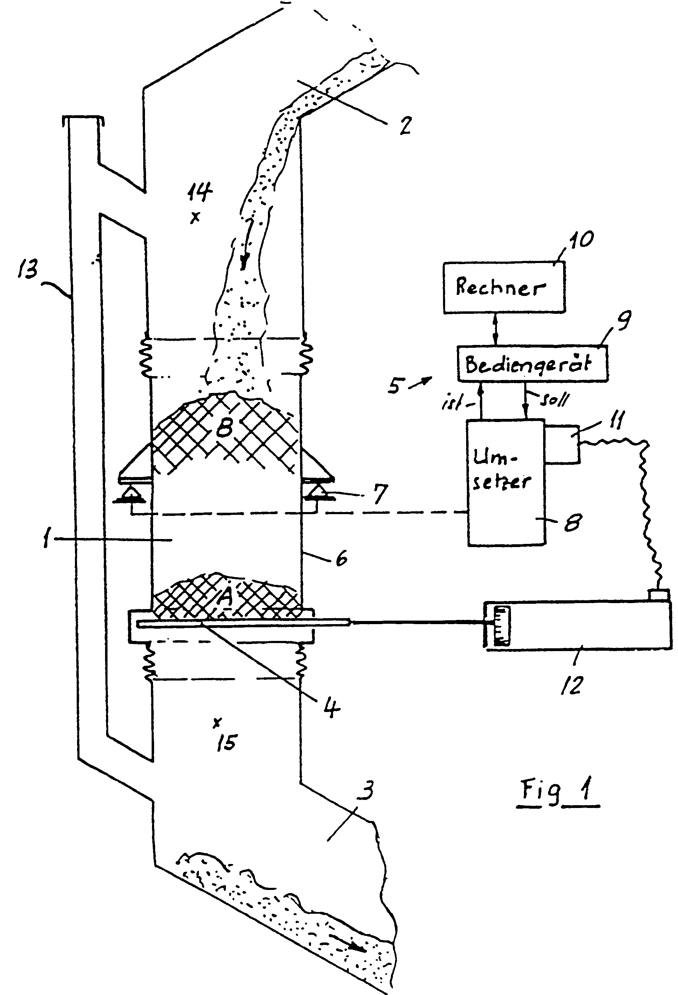

In Fig. 1 ist im Prinzip eine Durchlaufwaage als Verwägevorrichtung gezeigt, die in ihrem oberen Bereich eine Zuführleitung 2, in ihrem mitteleren Bereich einen rohrförmigen Wägeabschnitt, im folgenden Rohrwaage 1 genannt, und in ihrem unteren Bereich eine Abführleitung 3 aufweist Die Rohrwaage 1 ist mit einem Abschlußschieber 4 versehen, mittels dessen der Auslauf der Rohrwaage 1 verschlossen oder geöffnet werden kann. Des weiteren ist auch noch eine Rechner-Einheit 5 zur Verwertung der von der Verwägeeinrichtung angelieferten Meßsignale vorgesehen.

Der Hauptteil der Rohrwaage 1 wird durch einen Waagen behälter 6 gebildet, der auf Druckmeßdosen 7 oder auf anderen, zur raschen Erfassung momentaner Gewichtswerte geeigneten Elementen abgestützt ist. Der Waagenbehälter 6 ist bei der gezeichneten Prinzipdarstellung so angeordnet und ausgebildet, daß er als Teil der Förderleitung selbst angeordnet ist, d.h. er ist mit einem Durchlaufram versehen, dessen Querschnitt dem der Zuführleitung 2 bzw. der Abführleitung 3 entspricht. Hierdurch ist gewährleistet, daß das aus der Zuführleitung 2 ankommende Produkt ohne eine durch den Innenquerschnitt des Waagenbehälters 6 gebildete Störung in die Abführleitung 3 weiterströmen kann.

Die Druckmeßdosen 7 geben das von ihnen erzeugte, dem gemessenen Gewicht entsprechende Signal an einen Umsetzer 8 weiter, der über ein Bedienungsgerät 9 mit einem Rechner 10 verbunden ist Dabei ist der Umsetzer 8 auch an einen elektro-pneumatischen Wandler 11 angeschlossen, der mit einem pneumatischen Zylinder 12 zur Steuerung des Taktspieles der Rohrwaage 1 verbunden ist Die gezeigte Anordnung ermöglicht ein einfaches elektronisches Erfassen der gemessenen Gewichtswerte sowie deren Weiterleitung an den Rechner 10 zur Berechnung des gewünschten Produktdurchsatzes (Produktmenge pro Zeit). Des weiteren ist ein Druckausgleichsrohr 13 für die Ausschaltung solcher Störfaktoren vorgesehen, die dadurch entstehen, daß in der Zuführleitung 2 und der Abführleitung 3 unterschiedliche Druckverhältnisse auftreten können. Hierzu verbindet das Druckausgleichsrohr 13 einen Raum 14 direkt oberhalb des Waagenbehälters 6 mit einem Raum 15 direkt unterhalb desselben in freier Verbindung, unabhängig von der Stellung des Abschlußschiebers 4.

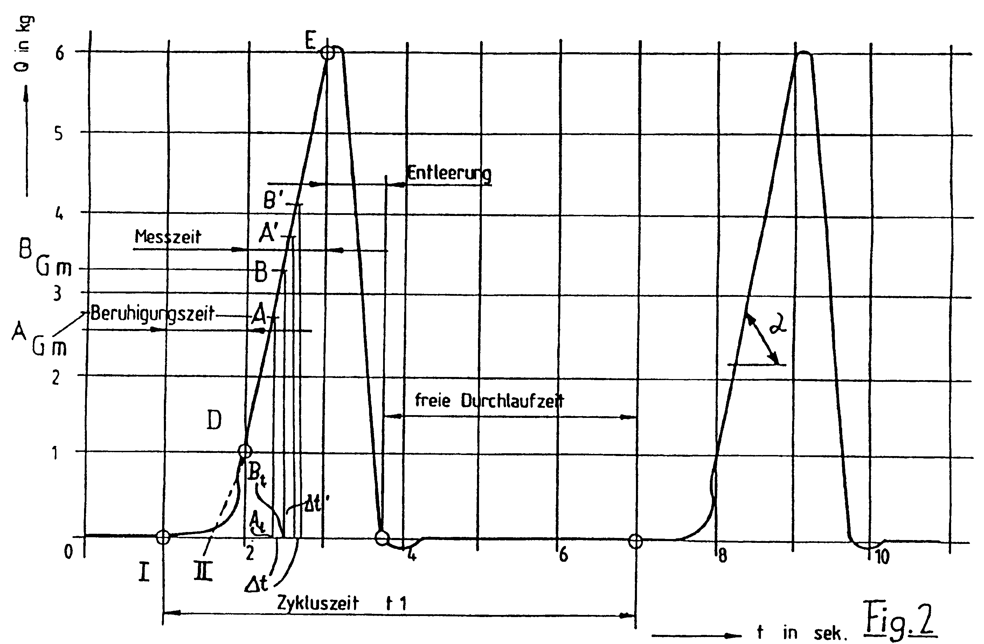

In Fig. 2 ist der Verlauf der gemessenen Gewichtszunahme Q (in kg) über der Zeit t bei einer besonderen - hier nicht beanspruchten - Verwendung der Durchlaufwaage dargestellt. Schutz für das hierbei praktizierte Verfahren sowie für die besonderen Merkmale der Verwägesystems zur Durchführung dieses Verfahrens wird in der bereits genannten Stammanmeldung beansprucht.

Der Zeitpunkt I bezeichnet dabei den Schließzeitpunkt des Waagenausganges, d.h. die Vollendung der Schließbewegung des Abschlußschiebers 4. Es wird angenommen, daß ein kontinuierlicher Schüttgutzufluß zur Rohrwaage 1 vorliegt. Mit der Schließung des Abschlußschiebers 4 (Zeitpunkt I) beginnt sich nun der Waagenbehälter 6 zu füllen, wobei das erzeugte Wägesignal entsprechend der Kurve vom Ausgangspunkt I zunächst etwas unregelmäßig und mit erkennbaren Überschwingungen ansteigt, weil hier das gesamte Waagensystem durch den ersten Aufprallimpuls in Schwingungen gebracht wird und deshalb überschwingt. Bei gut ausgebildeter Dämpfung ist jedoch bereits nach kurzer Zeit, in dargestellten Beispiel etwa 1 sek., eine Beruhigung eingetreten, die etwa dem Punkt D entspricht. Vom Punkt D an beginnt nun ein linearer Anstieg der gemessenen Werte bishin zum Punkt E, bei welchem der Abschlußchieber 4 geöffnet wird: entsprechend dem nunmehr erfolgenden Auslaufen des Produktes fällt des Gewicht in der Rohrwaage 1 wieder bis zu seinem Nullwert ab, wonach sich bei der Waage infolge der auftretenden Trägheitseffekte sogar kurzzeitig ein negatives-Gewichtssignal einstellt. Anschließend bleibt der Abschlußschieber 4 während einer gewissen Zeit geöffnet, bis er wieder geschlossen wird: nach erfolgter Schließung (emeuter Schließzeitpunkt des Waagenausgangs bzw. beendete Schließbewegung des Abschlußschiebers 4) wiederholt sich der ganze Vorgang erneut, was in Fig. 2 dargestellt ist.

Wesentlich für das geschilderte Verfahren ist hierbei, daß im Bereich des linearen Meßwertanstigs, d.h. im Bereich zwischen dem Beruhigungspunkt D und dem Endpunkt des linearen Gewichtsanstiegs E zu Beginn der Schieberöffnung die für das geschilderte Verfahren erforderlichen Messungen bei gleichzeitiger Zeiterfassung erfolgen. Der Punkt $A_t$ sei nun der dem Meßpunkt A zugeordnete Zeitpunkt, wobei $A_{Gm}$ der hierbei von der Waage gemessene Gewichtsausschlag sein soll. $B_t$ bezeichnet die Zeit, die dem Meßpunkt B zugeordnet ist, und $B_{Gm}$ sei der bei Punkt B festgestellte Meßwertausschlag für das Gewicht ("Gewichtsausschlag"). Eine Ablesung des Meßwertes während des fortgesetzten Zulaufens von Schüttgut erfaßt stets sowohl das Gewicht, wie auch den Impuls des fallenden Produktstromes gleichzeitig. Daher kann eine solche Einzelmessung niemals das absolute Gewicht des im Waagenbehälter 6 momentan aufgehäuften Schüttgutes darstellen. Innerhalb des bereits genannten linearen Bereiches der gemessenen Gewichtszunahme erfolgt nun eine Messung, etwa zwischen den Punkten A und B, die über einen nur sehr kurzen Referenzzeitabschnitt $\Delta t$ vorgenommen wird. Da es sich hier um einen sehr kurzzeitigen Vorgang handelt, kann davon ausgegangen werden, daß die Impulsänderung zwischen dem Punkt A und dem Punkt B so außerordentlich gering ist, daß sie vernachlässigt werden kann. Hieraus folgt, daß bei der Berechnung der Differenz der Werte $A_{Gm}$ sowie $B_{Gm}$ dann, wenn das Referenzzeitintervall nur sehr kurz gewählt ist, ein Differenzwert auftritt, bei dem der Anteil des von ihm noch erfaßten Impulses am Gesamtsignal als vernachlässigbar angesehen werden kann und dersomit auch unter der Anforderung großer Genauigkeit als ausreichend genauer Differenzwert für das Differenzgewicht zwischen dem Zeitpunkt $A_t$ und $B_t$ verwendet werden kann.

Bezeichnet man das auf die Zeiteinheit bezogene Gewicht des in die Waage eingeflossenen Schüttgutstromes als "Schüttgutdurchsatz", so ergibt sich dieser aus der Relation zwischen dem ermittelten Differenzwert einerseits und dem Referenzzeitabschnitt andererseits wie folgt, wobei der Ausdruck:

$$\frac{\Delta G}{\Delta t}$$

auch als sekundlicher Massestrom = m oder aber als Steigungswinkel $\alpha$ (bzw.$\tan\alpha$) angegeben werden kann.

$$\frac{B_{Gm}-A_{Gm}}{B_t-A_t}=\frac{\Delta G}{\Delta t}$$

Hierin bezeichnet $\Delta G$ das Differenzgewicht und $\Delta t$ die Dauer des Referenzzeitabschnittes.

Damit ergibt die Vermessung des Kurvenverlaufes innerhalb des Referenzzeitabschnittes $\Delta t$ eine Kurzzeitmessung, aus welcher sehr schnell und mit großer Genauigkeit der Wert des momentanen Schüttgutdurchsatzes unschwer festgestellt werden kann. Dabei besteht die Möglichkeit, wie aus Fig. 2 ebenfalls ersichtlich ist, daß im Bereich des linearen Meßwertanstiegs zwischen den Punkten D und E nicht nur während eines Referenzzeitabschnittes (Punkte A-B), sondern auch während eines weiteren Referenzzeitabschnittes zwischen den Punkten A′ und B′ zusätzlich eine gleiche Messung vorgenommen wird. Wenn dabei der Referenzzeitabschnitt at gleich groß wie zwischen den Punkten A und B gewählt wird, kann der Durchsatzwert, der sich aus der zweiten Messung ableiten läßt, mit dem Durchsatzwert aus der Messung während des ersten Referenzzeitabschnittes verglichen und, falls eine Abweichung vorliegt, ein Mittelwert gebildet werden, der dann mit noch größerer Genauigkeit den gemittelten Durchsatz zwischen dem Zeitpunkt $A_t$ und $B′_t$ wiedergibt. Bei Einsatz geeigneter Verwägungssysteme besteht keine Schwierigkeit, innerhalb des linearen Meßwertanstiegs zwischen den Punkten D und E eine Vielzahl solcher Einzelmessungen, jeweils über einen identischen Referenzzeitabschnitt $\Delta t$ ausgeführt, vorzunehmen und nach jeder neuen Messung den vorher bestimmten Durchsatzwert im Rahmen einer erneuten Mittelung zu korrigieren.

Die oben angegebene Messung des Differenzgewichtes $\Delta G$ und der Referenzzeitdauer $\Delta t$ läßt aber über die Berechnung des momentanen Durchsatzwertes hinaus auch noch, falls gewünscht, die Möglichkeit zu, auch die Gesamtfüllung des Waagenbehälters 6 bis zu dessen Entleerung, somit das insgesamt zwischen dem Zeitpunkt I und dem Punkt E in den Waagen behälter 6 eingespeiste Produktgewicht ebenfalls in großer Genauigkeit zu ermitteln. Denn dies kann unschwer dadurch erfolgen, daß das innerhalb eines Referenzzeitabschnittes gemessene Diferenzgewicht Δ G in geeigneter Weise linear extrapoliert und hochgerechnet wird, so daß die Gewichtsdifferenz zwischen dem Punkt E einerseits und dem Schnittpunkt II der Geraden des linearen Meßwertanstiegs mit der Abzisse (Zeitachse) andererseits berechnet wird: diese Gewichtsdifferenz ist dann eine sehr genaue Erfassung des Gewichtes des wirklich in den Behälter eingeströmten Schüttgutes, was durch Versuchsergebnisse bestens belegt werden konnte. Im Falle, daß zur Meßwerterfassung eine elektronische Waage eingesetzt wird, mit der gleichzeitig eine integrale Auswertung der Meßwertkurve über der Zeit erfolgen kann, besteht sogar die Möglichkeit, daß durch eine geeignete elektronische Schaltung für die Berechnung des Durchsatzes oder des in den Waagenbehälter eingespeisten Schüttgutgewichts der gemessene tatsächliche Kurvenverlauf ersetzt wird durch einen Kurvenverlauf, der aus einer z.B. durch den Punkt E verlaufenden Geraden besteht, bei der das Integral über den Zeitraum, der zwischen ihrem Schnittpunkt mit der Abzisse und dem Punkt E liegt, gleich dem Integral der tatsächlich gemessenen Kurve über den Zeitraum zwischen den Punkten I und E ist.

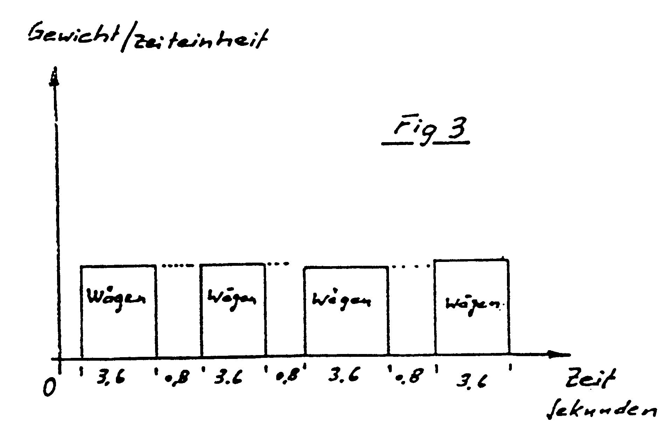

Die Darstellung nach Fig.3 zeigt die Möglichkeit, innerhalb eines vorgegebenen größeren Zeitraums mehrere Wägevorgänge, d.h. Wägezyklen auszuführen. Dabei können die mit "Wägen" bezeichneten Verwägungen sowohl als vollständige, aufeinanderfolge Wägezyklen über einen längeren Zeitraum hinweg, als auch als einzelne Referenzzeitabschnitte innerhalb eines einzelnen Wägezykluss angesehen werden. Die Erhöhung der Einzelmessungen sowohl innerhalb eines Wägezykluss, als auch innerhalb eines übergeordneten Zeitraums in Form einer Erhöhung der einzelnen Wägezyklen selbst führt zu einer laufend verbesserten und genaueren Bestimmung der gesuchten Werte infolge der Erfassung einer größeren Anzahl einzelner Meßwerte und der Möglichkeit, durch Mittelung dann statistisch verbesserte Werte zu erreichen.

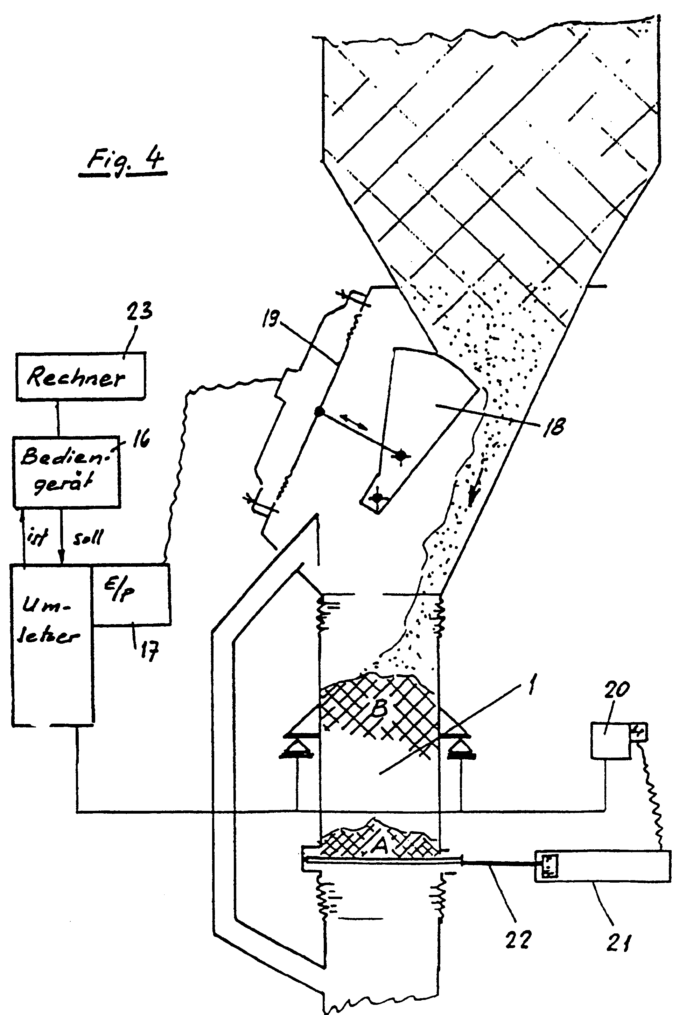

Nach Fig.4 kann als zusätzliche Funktion neben der Gewichts- bzw. Durchsatzerfassung eines kontinuierlichen Schüttgutstromes auch noch eine gewünschte Durchsatzleistung vorwählbar einsgestellt und sogar eingeregelt werden kann. Die gezeigte Einrichtung weist hierzu einen Rechner 23 und ein Bedien- oder Vorgabegerät 16 auf, das über einen ersten elektro-pneumatischen Wandler 17 und über eine pneumatische Kraftmembrane 19 mit einem Dosierelement 18 sowie über einen zweiten elektro-pneumatischen Wandler 20 mit einem pneumatischen Zylinder 21 und einem Abschlußschieber 22 verbunden ist. Die (zur Darstellung nach Fig. 1 identische) Rohrwaage 1 erlaubt hier die beiden vorgenannten Funktionen. Die Öffnungsstellung des Dosierelements 18 wird jeweils während eines Referenzzeitabschnittes Δ t eingeregelt und bei jeder wiederholten Messung korrigiert. Der jeweils ermittelte Durchsatz wird mit einem Vorgabewert verglichen und der gewünschte Durchsatz mit dem Dosierelement 18 laufend eingeregelt. Das Dosierelement 18 kann für schwerfließfähige Güter auch als Dosierschnecke mit variabler Drehzahl ausgebildet sein.

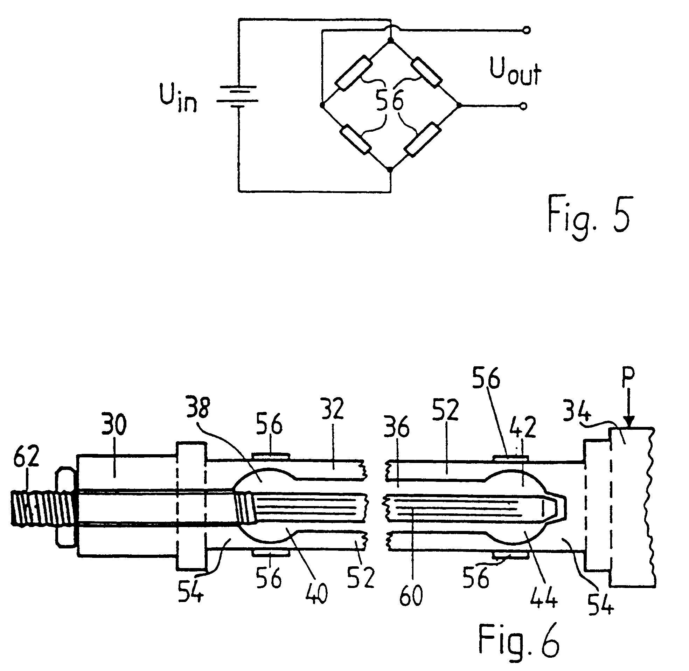

In Fig. 6 ist ein Dehnmessstreifen-Wägebalken im Prinzip gezeigt, der bei einer erfindungsgemäßen Vorrichtung zur Erfassung der Meßwerte eingesetzt werden kann. Er weist einen starren Träger 30, einen Biegebalken 32 sowie einen Flansch 34 zur Übertragung einer auf ihn wirkenden Kraft P auf. Der Biegebalken 32 besteht dabei aus einem elastischen Material und ist nach Art eines Viergelenksystems ausgebildet. Hierzu weist er einen im Querschnitt hantelförmigen Durchbruch 36 auf, der mittig im Biegebalken 32 insbesondere derart angeordnet ist, daß seine Längsachse mit der Längsachse des Biegebalkens 32 übereinstimmt. Der Mittelteil des hantelförmigen Durchbruchs 36 ist mit einem rechteckigen Querschnitt versehen. Die den "Gewichten" der Hantel entsprechenden Abschnitte weisen dagegen einen kreisförmigen Querschnitt auf. Jeder im Querschnitt kreisförmige Abschnitt des Durchbruches 36 entspricht zwei Gelenkstellen 38 und 40 bzw. 42 und 44: diese Abschnitte werden daher in folgenden "Gelenkstellen 38, 40, 42 bzw. 44" genannt. Bei Einwirkung einer Kraft P auf den Flansch 34 verformt sich der Biegebalken 32 im wesentlichen im Bereich seiner vier Gelenkstellen 38 bis 44. Der Biegebalken ist hierbei über seinen Träger 30 ortsfest mit einer starren Basis verbunden.

Der hantelförmige Durchbruch 36 wird in Querrichtung im wesentlichen von zwei symmetrisch zur Biegebalken-Längsachse angeordneten balkenartigen Biegeelementen 52 und in Längsrichtung von zwei Endstücken 54 umgrenzt. Die Endstücke verbinden jeweils paarweise zwei einander gegenüberliegende Enden der Biegeelemente 52. Der so erhaltene Aufbau des Biegebalkens 32 ist demnach im wesentlichen parallelogrammartig.

An den Stellen der äußeren, einander abgekehrten Oberflächen der Biegeelemente 52, die sich bei Beaufschlagung des Biegebalkens 32 mit einer Kraft P am stärksten verformen, sind elektromechanische Wandlerelemente 56 befestigt. Da dies die Gelenkstellen 38 bis 44 sind, sind die Wandlerelemente 56 auf den oberhalb bzw. unterhalb der Gelenkstellen befindlichen Abschnitten der äußeren Oberflächen der Biegeelemente 52 befestigt. Vorzugsweise weisen die vier Wandlerelemente 56 Dehnmeßstreifen auf, und zwar zwei von ihnen gegebenenfalls zusätzlich Kompensationswiderstände.

Die Wandlerelemente 56 sind gemäß Fig. 5 in üblicher Weise in einer Brückenschaltung verschaltet Diese Brückenschaltung wird eingangsseitig von der Spannung $U_{in}$ versorgt und gibt ausgangsseitig ein dem Kraftmeßsignal korrespondierendes Signal $U_{OUT}$ ab. Die Wandlerelemente 56 können hierbei entweder aus einer Parallelschaltung oder aus einer Serienschaltung eines Kompensationswiderstandes und eines Dehnmeßstreifens oder aus einer Kombination besagter Parallel- und Serienschaltung bestehen.

Die in Fig. 6 gezeigte Vorrichtung weist zusätzlich auch noch einen den Biegebalken 32 bei Überlast abstützenden Sicherungsstab 60 auf, der über sein hinteres Ende 62 mit dem Träger 30 und dem daran befestigten Endstück 54 des Biegebalkens 32 starr verbunden ist. Im übrigen sind Zweck und Ausführung des Sicherungsstabes zur weiteren Beschreibung der Erfindung nicht wesentlich.

**Patentansprüche**

1.  Durchlaufwaage zum Erfassen des Durchsatzes eines durch eine Förderleitung fließenden Stromes von in einer Getreidemühle verarbeiteten schüttbaren Nahrungsmitteln mit

    a) drei als ein Leitungsabschnitt der Förderleitung selbst ausgestalteten rohrförmigen Abschnitten (2,6,3), deren Innenquerschnitte einander entsprechende Form und im wesentlichen gleiche Querschnittsflächen haben, nämlich:

    b) einem Zuführleitungsabschnitt (2),

    c) einem dem Zuführleitungsabschnitt (2) im Abstand nachgeordneten rohrförmigen Wägeabschnitt (6), und

    d) einem dem Wägeabschnitt (6) im Abstand nachgeordneten Abführleitungsabschnitt (3); wobei

    e) nur der Wägeabschnitt (6) auf elektronischen Gewichtserfassungsmitteln (7) ruht; sowie

    f) einem im Auslaßbereich des Wägeabschnittes (6) mit diesem verbundenen und von diesem gehaltenen verstellbaren Verschlußorgan (4;22), das derart ausgebildet und angeordnet ist, daß es in eine den Auslaufbereich des Wägeabschnittes (6) verschließende Stellung und in eine einen ungehinderten Nahrungsmittelaustritt vom Wägeabschnitt (6) in den Abführleitungsabschnitt (3) gewährleistende Offenstellung bringbar ist; und schließlich

    g) Mitteln zum Druckausgleich zwischen dem Zuführleitungsabschnitt (2) und dem Abführleitungsabschnitt (3).

2.  Durchlaufwaage nach Anspruch 1, dadurch gekennzeichnet, daß der Wägeabschnitt (6) einen zylindrischen Durchlaufraum aufweist, dessen Höhe 1,5 bis 5 mal seinem Durchmesser entspricht.

3.  Durchlaufwaagenordnung nach Anspruch 1 oder 2, dadurch gekennzeichnet, daß das Verschlußorgan (4;22) als verschieb- oder verschwenkbarer Abschlußschieber ausgestaltet ist.

4.  Durchlaufwaage nach Anspruch 3, dadurch gekennzeichnet, daß der Abschlußschieber (4;22) über einen pneumatischen Zylinder (12;21) betätigbar ist, der seinerseits über einen elektro-pneumatischen Wandler (11;20) von einem Rechner (10;23) angesteuert wird.

5.  Durchlaufwaage nach einem der vorstehenden Ansprüche, dadurch gekennzeichnet, daß eine Dosiereinrichtung (18) vorgesehen und mit einem Vorgabegerät (16) zur Einstellung einer vorwählbaren kontinuierlichen Durchsatzleistung verbunden ist.

6.  Durchlaufwaage nach Anspruch 5, dadurch gekennzeichnet, daß ein Rechner (23) zur Ansteuerung des Vorgabegerätes (16) vorgesehen ist, der vom Ausgang der Einrichtung zur Ermittlung des Nahrungsmitteldurchsatzes angesteuert wird, und wobei der Rechner (23), das Vorgabegerät (16), die Dosiereinrichtung (18) und die Einrichtung zur Ermittlung des Nahrungsmitteldurchsatzes eine Durchsatzregeleinrichtung bilden.

7.  Durchlaufwaage nach Anspruch 5 oder 6, dadurch gekennzeichnet, daß die Dosiereinrichtung (18) als Drehschieber oder als Dosierschnecke ausgebildet ist.

8.  Durchlaufwaage nach einem der vorstehenden Ansprüche, dadurch gekennzeichnet, daß - zum Druckausgleich zwischen dem Zufuhrleitungsabschnitt (2) und dem Abführleitungsabschnitt (3) - der zuführleitungsabschnitt (2) unmittelbar über und der Abführleitungsabschnitt (3) unmittelbar unterhalb des Wägeabschnittes (6) über ein seitliches Druckausgleichsrohr (12) frei miteinander verbunden sind.

**Claims**

1.  Continuous weighing machine for ascertaining the throughput of a stream of pourable food product processed in a grain mill, the stream flowing through a conveying conduit, with

    a) three tubular sections (2, 6, 3) arranged as a conduit section of the conveying conduit itself, the internal cross-sections of which are of a shape corresponding to one another and have essentially identical cross-sectional areas, specifically:

    b) a supply conduit section (2),

c) a tubular weighing section (6) arranged downstream of the supply conduit section (2) with spacing therefrom, and

d) a discharge conduit section (3) arranged downstream of the weighing section (6) with spacing therefrom; where

e) only the weighing section (6) rests on electronic weight-detecting means (7) ; and

f) in the outlet region of the weighing section (6) an adjustable closure element (4; 22) connected thereto and supported thereby is so constructed and arranged that it can be brought into a position closing the outlet region of the weighing section (6) and into an open position ensuring unimpeded outflow of food product from the weighing section (6) into the discharge conduit section (3); and finally

g) means for pressure compensation between the supply conduit section (2) and the discharge conduit section (3).

2. Continuous weighing machine according to Claim 1, characterised in that the weighing section (6) has a cylindrical throughflow space the height of which corresponds to 1.5 to 5 times its diameter.

3. Continuous weighing machine arrangement according to Claim 1 or 2, characterised in that the closure element (4; 22) is constructed as a displaceable or pivotably movable closing valve.

4. Continuous weighing machine according to Claim 3, characterised in that the closing valve (4; 22) is adapted to be actuated by means of a pneumatic cylinder (12; 21) which itself is operated by a computer (10; 23) by means of an electro-pneumatic transducer (11; 20).

5. Continuous weighing machine according to one of the preceding claims, characterised in that a dosaging device (18) is provided and is connected to a control unit (16) for adjusting a preselected continuous throughput performance.

6. Continuous weighing machine according to Claim 5, characterised in that a computer (23) is provided for operating the control unit (16) and is acted upon by the output of the device for ascertaining food product throughput, and the computer (23), the control unit (16), the dosaging device (18) and the device for ascertaining the food product throughput form a throughput control system.

7. Continuous weighing machine according to Claim 5 or 6, characterised in that the dosaging device (18) is constructed as a rotary slide valve or as a dosaging worm.

8. Continuous weighing machine according to one of the preceding claims, characterised in that - for pressure compensation between the supply conduit section (2) and the discharge conduit section (3) - the supply conduit section (2) and the discharge conduit section (3) connect freely with one another, in the former case immediately above and in the latter case immediately below the weighing section (6) through the agency of a lateral pressure-compensation pipe (12).

## Revendications

1. Balance de pesage continu permettant de déterminer le débit d'un écoulement de produits alimentaires en vrac, traités dans une minoterie, qui traverse une conduite de transport, comprenant :

a) trois sections (2, 6, 3) tubulaires constituées comme des sections de conduite de la conduite de transport elle-même, dont les sections transversales intérieures ont des formes correspondantes et sensiblement la même surface de section transversale, savoir :

b) une section de conduite d'amenée (2),

c) une section de pesage (6) tubulaire disposée à une certaine distance en aval de cette section de conduite d'amenée (2) et

d) une section de conduite d'évacuation (3) disposée à une certaine distance en aval de cette section de pesage (6),

e) seulement la section de pesage (6) reposant sur des moyens électroniques de détermination de poids (7) et, ainsi que,

f) dans la zone de sortie de la section de passage (6) un organe d'obturation (4 ; 22) solidaire de cette section et pouvant être réglé en étant porté par cette dernière, qui est agencé et disposé de façon à pouvoir être amené dans une position où il obture la zone de sortie de la section de pesage (6) et dans une position ouverte assurant un passage sans obstacle des produits alimentaires de la section de pesage (6) jusque dans la section de conduite d'évacuation (3); et enfin :

g) des moyens pour égaliser la pression entre la section de conduite d'amenée (2) et la section de conduite d'évacuation (3).

2.  Balance continue suivant la revendication 1, caractérisée en ce que la section de pesage (6) comporte une chambre cylindrique de passage dont la hauteur correspond à 1,5 à 5 fois son diamètre.

3.  Balance continue suivant l'une quelconque des revendications 1 et 2, caractérisée en ce que l'organe d'obturation (4 ; 22) est réalisé sous la forme d'un tiroir de fermeture qui est agencé de façon à pouvoir coulisser ou basculer.

4.  Balance continue suivant la revendication 3, caractérisée en ce que le tiroir de fermeture (4 ; 22) est agencé de façon à pouvoir être actionné par un vérin pneumatique (12 ; 21) qui est lui-même commandé par un ordinateur (10 ; 23) par l'intermédiaire d'un convertisseur électropneumatique (11; 20).

5.  Balance continue suivant l'une quelconque des revendications 1 à 4, caractérisée en ce qu'un dispositif de dosage (18) est prévue et est relié à un appareil de fixation de valeur de référence (16) permettant de régler un débit continu pouvant être choisi à l'avance.

6.  Balance continue suivant la revendication 5, caractérisée en ce qu'il est prévu un ordinateur (23) qui sert à commander l'appareil de fixation de valeur de référence (16) et qui est commandé par la sortie du dispositif de détermination du débit de produits alimentaires, l'ordinateur (23) l'appareil de fixation de valeur de référence (16), le dispositif de dosage (18) et le dispositif de détermination du débit de produits alimentaires constituant un dispositif de régulation du débit.

7.  Balance continue suivant l'une quelconque des revendications 5 et 6, caractérisée en ce que le dispositif de dosage (18) est réalisé sous la forme d'un tiroir rotatif ou sous la forme d'une vis sans fin de dosage.

8.  Balance continue suivant l'une quelconque des revendications 1 à 7, caractérisée en ce que -pour l'égalisation de pression entre la section de conduite d'amenée (2) et la section de conduite d'évacuation (3)- la section de conduite d'amenée (2), située directement au-dessus de la section de pesage (6), et la section de conduite d'évacuation (3), située directement audessous de cette dernière, sont réunies librement entre elles par un tube latéral de compensation de pression (13).

Fig 1

Fig. 2

EP 0 256 222 B2

Gewicht/zeiteinheit

Fig 3

Wägen    Wägen    Wägen    Wägen

0    3,6    0,8    3,6    0,8    3,6    0,8    3,6    Zeit

Sekunden

Fig. 4

$U_{in}$

$U_{out}$

56

## Fig. 5

30 38 56 32 52 56 42 34 P

62 54 56 40 52 36 60 56 44 54

## Fig. 6